Europäisches Patentamt

European Patent Office

Office européen des brevets

(19)

(11) Veröffentlichungsnummer : **0 128 329**
**B1**

(12)

# EUROPÄISCHE PATENTSCHRIFT

(45) Veröffentlichungstag der Patentschrift :
27.07.88

(21) Anmeldenummer : 84104995.0

(22) Anmeldetag : 03.05.84

(51) Int. Cl.⁴ : **B 29 C 53/02**

(54) **Aufspanntisch.**

(30) Priorität : 07.05.83 DE 8313613 U

(43) Veröffentlichungstag der Anmeldung :
**19.12.84 Patentblatt 84/51**

(45) Bekanntmachung des Hinweises auf die Patenterteilung : **27.07.88 Patentblatt 88/30**

(84) Benannte Vertragsstaaten :
**AT BE CH DE FR GB IT LI NL SE**

(56) Entgegenhaltungen :
**CH-A-   551 855**
**DE-A- 2 914 633**
**DE-A- 3 020 922**
**FR-B- 2 111 967**
**US-A- 1 351 472**
**US-A- 3 776 539**
**KUNSTSTOFFE, Band 73, Nr. 3, März 1983, München,**
**BRD, H. Vowinkel: "Bearbeiten und Fügen von**
**Hohlkammerprofilen aus modifiziertem PVC", Seiten**
**118-122**

(73) Patentinhaber : **Maschinen Witte KG**
**Zum Schoppenbusch 15**
**D-4517 Hilter a. T. W. (DE)**

(72) Erfinder : **Witte, Karl-Heinz**
**Zum Schoppenbusch 15**
**D-4517 Hilter a. T.W. (DE)**

(74) Vertreter : **Busse & Busse Patentanwälte**
**Postfach 1226**
**D-4500 Osnabrück (DE)**

**Beschreibung**

Die Erfindung betrifft einen Aufspanntisch nach dem Oberbegriff des Anspruchs 1.

Für eine variablere Anordnung von Ziehschablonen der grundsätzlich in der DE-OS 30 20 922 beschriebenen Art sind statt formgeschnittener Platten bereits Aufspanntische bzw. Montageplatten mit Befestigungsschlitzen vorgeschlagen worden, wie sie auch bei Karusseldrehbänken und sonstigen Werkzeugmaschinen häufig verwandt werden. In den Befestigungsschlitzen lassen sich Befestigungselemente leicht verschiebbar verankern. Die Ziehschablonen können damit in ihrer Lage, insbesondere auch in ihrer Längskrümmung einfach und schnell umgestellt werden. (DE-GM 82 15 787).

Diese gegenüber der zuvor bereits angewandten Montage von Ziehschablonenpaaren auf formgeschnittenen Platten leichter veränderbare Montage hat den Nachteil ungewisser Präzision und umständlicher Justierungen. Toleranzen bei den für die Ziehverformung insbesondere in Betracht kommenden Kunststoffensterprofilen sind aber gefährlich für die vorgegebenen Zuordnungen zwischen Fensterrahmen und Fensterflügel bzw. Fensterflügel und Scheibe.

Aufgabe der Erfindung ist es dementsprechend, einen Aufspanntisch zu schaffen, der die Vorteile leichter Veränderbarkeit der Einziehform mit hoher Ausricht- und Arbeitspräzision verbindet.

Gemäß der Erfindung wird diese Aufgabe mit einem Aufspanntisch nach dem Anspruch 1 gelöst. Damit wird die Möglichkeit geschaffen, sowohl für sog. « Rundbögen », d.h. Bögen mit einem Umfangswinkel von etwa 180° wie für sog. Stichbögen, d.h. Segmentbögen mit einem sehr viel kleineren Umfangswinkel die Bogenform von einem vorgegebenen Kreismittelpunkt ausgehend präzise festzulegen. Dabei kann es ausreichen, mit einem entsprechenden Ausrichtwerkzeug Befestigungsmittel einer Seite, z. B. der Außenseite der Ziehschablonen-Paare genau auszurichten und die andere Seite dann mit einer geeigneten Einstellehre auf den passenden Abstand zu setzen.

Eine dementsprechend vorzusehende Drehlageraufnahme kann aber auch für die dem Ausrichten nachfolgenden Arbeitsgänge verwandt werden, indem ein Ziehwerkzeug an die Stelle des Ausrichtwerkzeugs gesetzt wird (oder das Ausrichtwerkzeug in ein Ziehwerkzeug umgewandelt wird), so daß das Ziehwerkzeug geführt bleibt.

Für eine präzise Verformung der Kunststoffprofile ist es weiterhin zweckmäßig, die Befestigungsschlitze in der Montageplatte durch Einlegestäbe dort oberflächenbündig abzudecken, wo Verformungsmarken durch die Schlitze am Formling auftreten können.

Weitere Merkmale und Vorteile der Erfindung ergeben sich aus den Ansprüchen und der nachfolgenden Beschreibung, in der ein Ausführungsbeispiel des Gegenstands der Erfindung anhand einer Zeichnung näher erläutert ist. In der Zeichnung zeigen :

Fig. 1 Teil eines Aufspanntisches mit Ziehschablonen und Ziehwerkzeug in schnittbildlicher Seitenansicht, und Ziehwerkzeug in schnittbildlicher Seitenansicht,

Fig. 2 Draufsicht auf den Teil des Aufspanntisches nach Fig. 1,

Fig. 3 Teil eines Aufspanntisches mit Ausrichtwerkzeug in Draufsicht,

Fig. 4 Schnitt nach Linie IV-IV in Fig. 3.

Fig. 5 Schnitt durch den Aufspanntisch nach Fig. 4 in einer weiteren Ausrichtphase,

Fig. 6 Draufsicht auf den Aufspanntisch beim Ausrichten (ohne Ausrichtwerkzeug),

Fig. 7 Aufspanntisch nach dem Ausrichten in Gesamt-Draufsicht,

Fig. 8 Aufspanntisch beim Ausrichten für Stichbögen in Teil-Draufsicht,

Fig. 9 Aufspanntisch gemäß Fig. 8 beim Formziehen in Teil-Draufsicht,

Fig. 10 u. 11 schnittbildliche Seitenansicht zu Fig. 9 bzw. Fig. 8.

Fig. 12 Draufsicht auf einen weiteren Aufspanntisch für tangential fortgeführte Bogenenden,

Fig. 13 Teil-Draufsicht auf einen noch weiteren Aufspanntisch und

Fig. 14 Seitenansicht des Aufspanntisches nach Fig. 13.

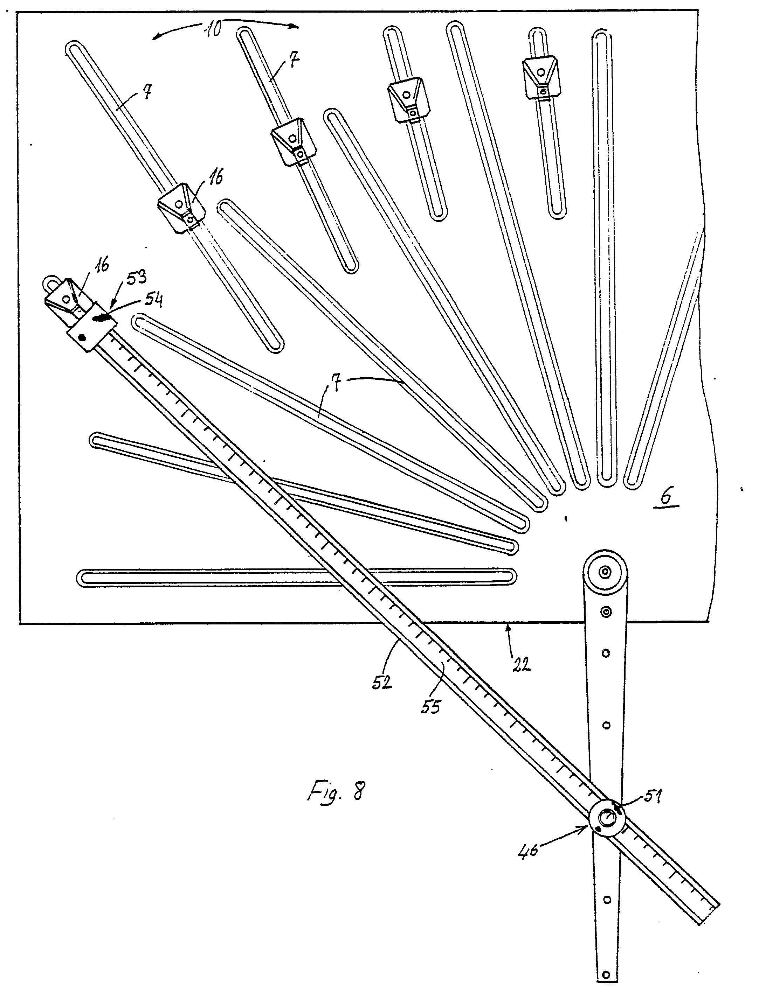

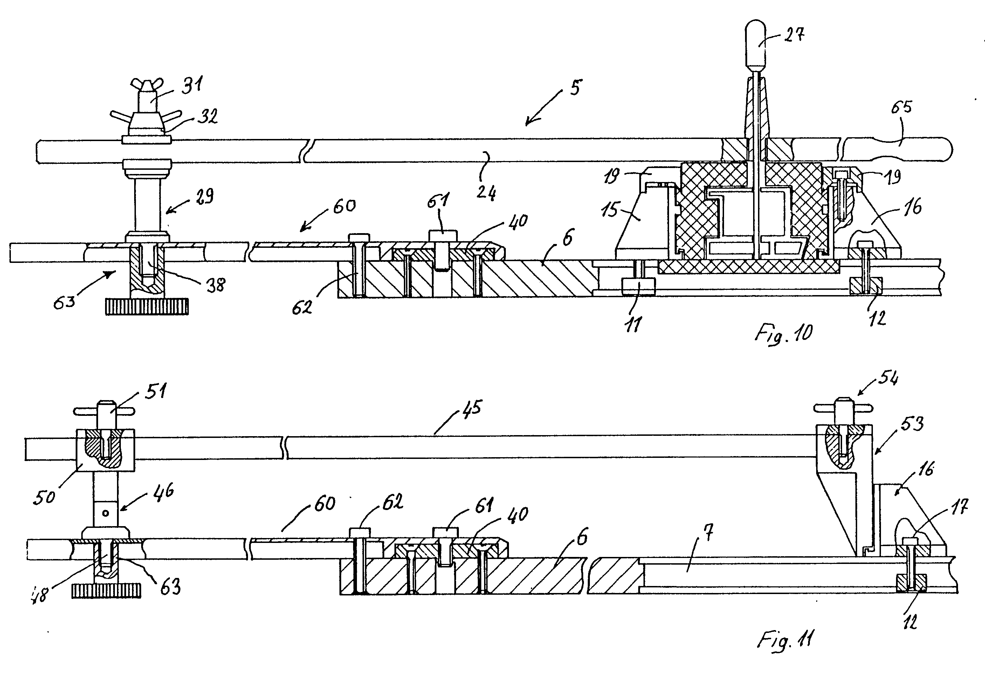

Der in der Zeichnung aus Gründen des Darstellungsaufwandes jeweils nur teilweise veranschaulichte Aufspanntisch dient dazu, die Zieh-Verformung von erweichten Kunststoffprofilen in einer einfachen, variablen aber präzisen Weise zu ermöglichen. Ein Profilstrangabschnitt 1 wird zwischen zwei Schablonen 2 und 3 der Länge nach eingezogen, die zwischeneinander einen dem Profilstrangabschnitt angepaßten Formkanal vorgegebener Längskrümmung bilden und oberseitig einen Spalt 4 für den Durchgriff eines insgesamt mit 5 bezeichneten Ziehwerkzeugs freilassen. Die Ziehschablonen 2, 3 sind auf einer Montageplatte 6 festgelegt, die von Befestigungsschlitzen 7 durchbrochen ist. Diese Befestigungsschlitze bilden zwei fächerartige Gruppen von Schlitzen, die jeweils auf einen gemeinsamen Kreismittelpunkt zulaufen. So ergibt eine weiter nach innen zulaufende Gruppe von dreizehn Schlitzen einen ersten Fächer 8 mit einer 180°-Spreizung um einen Kreismittelpunkt 9, während ein zweiter Fächer 10 von weiter außenliegenden Schlitzen radial auf einen Kreismittelpunkt ausgerichtet ist, der außerhalb des Grundrisses der Montageplatte liegt und auf den anhand der Figuren 8 bis 11 noch zurückzukommen sein wird.

Der radiale Verlauf der Schlitze ist keineswegs obligatorisch für diese Vorrichtung, bietet vielmehr unter einer großen Zahl von sonstigen Formen lediglich eine besonders naheliegende und überschaubare Gestalt.

Die Schlitze 7 haben einen Doppel-T-Querschnitt, von dem die untere T-Form dazu dient, passende Mutterteile 11, 12 für Spannschrauben 13, 14 unverdrehbar und ohne einen nach unten vorstehenden Überstand aufzunehmen. Die Spannschrauben 13, 14 sind ihrerseits in (baugleichen) Justierböcken 15 bzw. 16 so angeordnet, daß sie mit einem Schlüsselkopf 17 von oben zugänglich sind. Durch Anziehen der Spannschrauben können die Justierböcke 15, 16 längs der Schlitze 7 festgelegt werden.

Jeder der Justierböcke 15, 16 ist nur mit einer der beiden Schablonen 2, 3 verbunden, und zwar über einen formschlüssigen Eingriff. An der Unterseite besitzen die Justierböcke einen vorspringenden, endseitig nach oben gerichteten Haken 18, der in eine entsprechende nutförmige Hinterschneidung an der Rückseite des Profils der zugehörigen Schablone eingreift. Eine entsprechend greifbare Hinterschneidung weisen die Schablonenprofile oberseitig (mit einer schwalbenschwanzartigen Form) auf. Dort besitzen die Klemmböcke 15, 16 Klammerbacken 19 (die wegen ihrer übereinstimmenden Form auch mit übereinstimmenden Bezugszeichen versehen sind). Diese Klammerbacken 19 sind jeweils durch eine Spannschraube 20 gegenüber dem zugehörigen Justierbock 15 bzw. 16 anziehbar, wobei die Backen fest in das Profil der Schablonen 2 bzw. 3 eingreifen. Damit läßt sich jede der beiden Schablonen 2, 3 jeweils dort festlegen, wo sie einen der Befestigungsschlitze überquert. Die Klammerbacken 19 lassen sich auch leicht ablösen, um die Schablonen 2, 3 herauszunehmen, wenn etwa ein geformter und abgekühlter Profilstrangabschnitt 1 entnommen werden soll.

Der feste Halt der einzelnen Schablonen 2,3 gegenüber der Montageplatte 6 und einander gegenüber ist insbesondere für die Verarbeit-ungsqualität von Interesse, da die Schablonen keine direkte Berührung miteinander und dementsprechend auch keine Abstützung gegeneinander aufweisen. Damit kann von der Oberfläche der Montageplatte 6 bei der Verformung Gebrauch gemacht werden, die im wesentlichen glatt ist. Damit aber nicht im Bereich der Schlitze 7 entsprechende Arbeitsmarken auftreten, sind dort jeweils den Querschnittsbereich der Schablonen 2,3 untergreifende Einlegestäbe 21 vorgesehen, die in das obere T-Profil der Schlitze 7 mit entsprechend geformtem Querschnitt eingreifen, so daß sie sicher liegen und nicht nach unten durchfallen können. Die Einlegestäbe 21 schließen mit der Oberfläche der Montageplatte 6 flächenbündig ab.

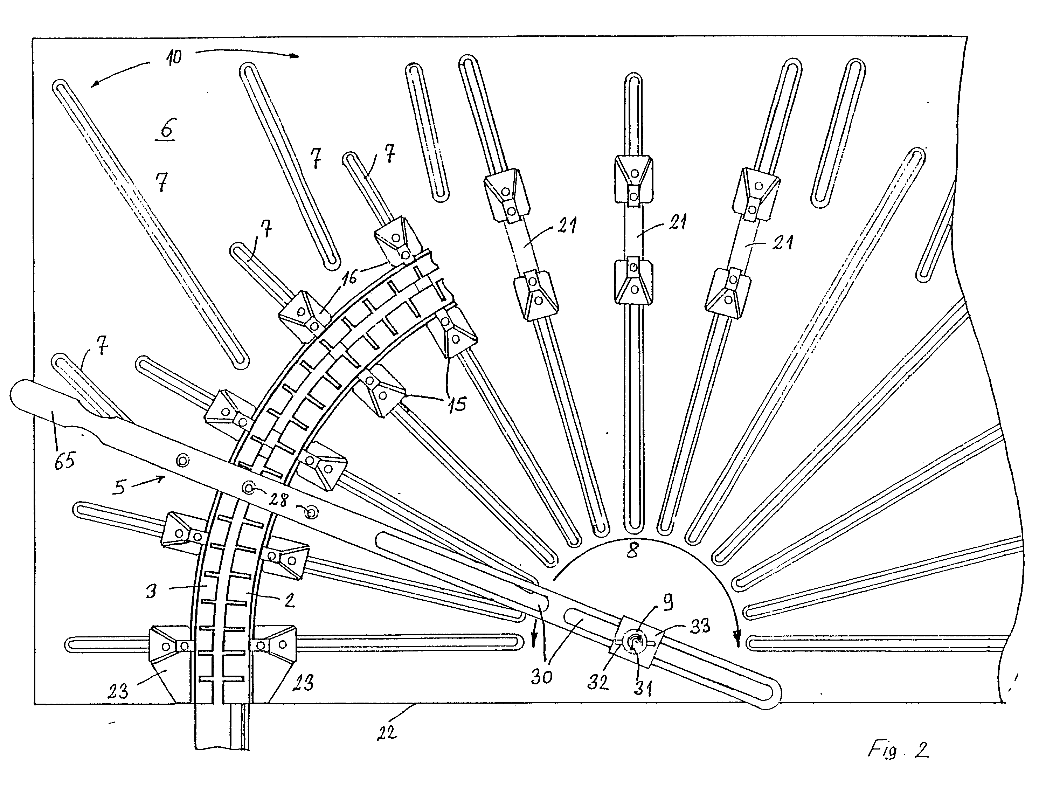

Eine so auf der Montageplatte 6 festgelegte Einziehform, die beispielsweise einen 180°-Bogen vorgegebenen Durchmessers umfaßt, wird einenends an den dem Kreismittelpunkt 9 benachbarten Rand 22 der Montageplatte 6 herangeführt, wo die Justierböcke auch eine für die Festlegung der Enden aus Fig. 2 näher ersichtliche Sonderform von Justierböcken 23 besitzen. An diesen Punkt ist beim Gebrauch des Aufspanntisches das Entnahmeende eines (nicht dargestellten) Heizgerätes angeordnet, in dem die zu verformenden Profilstrangabschnitte auf Erweichungstemperatur gebracht werden.

Typischerweise handelt es sich um einen trogartigen Behälter mit einer auf Temperaturen von mehr als 100° erhitzbaren Flüssigkeit. Mit einer Hebevorrichtung kann das benachbarte Ende des getauchten Profilstrangabschnitts aus der Flüssigkeit heraus an die Ziehform aus den Schablonen 2,3 herangebracht werden, von wo es der Länge nach in die Form eingezogen wird.

Mit der Veränderung der Formdurchmesser ergeben sich auch Lageveränderungen der Schablonen 2,3 auf der Montageplatte. Damit die Ausrichtung auf das Heizgerät präzise herstellbar ist, ist die Montageplatte parallel zur Kante 22 bezüglich des Tischuntergestells verschieblich gelagert, und zwar über ein Verstellgetriebe mit Handkurbel. Darüber hinaus ist für die entsprechende Ausrichtung bei der Herstellung von Stichbögen unter Benutzung des Fächers 10 von Befestigungsschlitzen 7 vorgesehen, daß das Tischgestell insgesamt auf nachlaufenden Rollen steht, so daß der Aufspanntisch auch dann in die gewünschte Position zum Heizgerät verfahren werden kann.

Der eigentliche Ziehvorgang läßt sich mit Hilfe des Ziehwerkzeugs 5 durchführen. Dieses greift mit einem von oben nach unten durch einen Schwenkarm 24 und eine darin gelagerte Führungshülse 25 mit einem Stift 26 hindurch und gelangt durch den Ziehspalt 4 in ein dazu vorbereitetes Loch im Profilstrangabschnitt 1. Zu dem aus dem Stift 26 und der Führungshülse 25 gebildeten Werkzeugkopf gehört auch ein Griff 27 am oberen Ende des Stiftes 26. Diese Einheit ist in einer Bohrung 28 im Schwenkarm 24 angeordnet, wobei der Schwenkarm mehrere solcher Bohrungen 28 (vgl. Fig. 2) aufweist, so daß der Werkzeugkopf versetzt werden kann.

Der Schwenkarm 24 ist an einem Drehlagerfuß 29 gelagert, welcher den Schwenkarm 24 in einem von zwei hintereinanderliegenden Längsschlitzen 30 durchgreift und oberseitig durch Flügelschrauben 31,32 (konterbar) festlegt. Der Drehlagerfuß übergreift bzw. untergreift den Schwenkarm 24 weiterhin mit Laschen 33,34, so daß dieser exakt geführt ist. Damit wird der Werkzeugkopf immer parallel zu sich selbst gehalten, so daß ein Verkanten bei der Arbeit ausgeschlossen ist. Bei der Formung von Bögen ist es darüber hinaus möglich, den Schwenkarm auch in Längsrichtung gegenüber dem Drehlagerfuß 29 festzulegen, wenngleich dieses in der Regel nicht erforderlich ist und für besondere Formen eine Längsverschieblichkeit des Schwenkarms 24 gegenüber dem Drehlagerfuß 29 notwendig ist. Bei der Schwenkbewegung dreht sich der Schwenkarm 24 über einen Drehteller 35 am oberen Ende einer Drehlagersäule 36, die ihrerseits mit einer Fußplatte 37 und einem Gewindezapfen 38 in einer Drehlageraufnahme 40 befestigt ist. Es handelt sich hier um eine Gewindeplatte mit einer durchgehenden Gewindebohrung über einer Bohrung 41 in der Montageplatte. Die Gewindeplatte ist durch außenliegende Verschraubungen 42, 43 fest auf der Oberseite der Montageplatte fest verankert.

Die Drehlageraufnahme 40 markiert einen Mittelpunkt für einen Bereich kleinerer Bogenradien bis zur Länge der Schlitze 7 des Fächers 8 (vermindert um den Platzbedarf der Justierböcke 16) entspricht. Im vorliegenden Ausführungsbeispiel sind auch die Schlitze 7 auf diesen Kreismittelpunkt ausgerichtet.

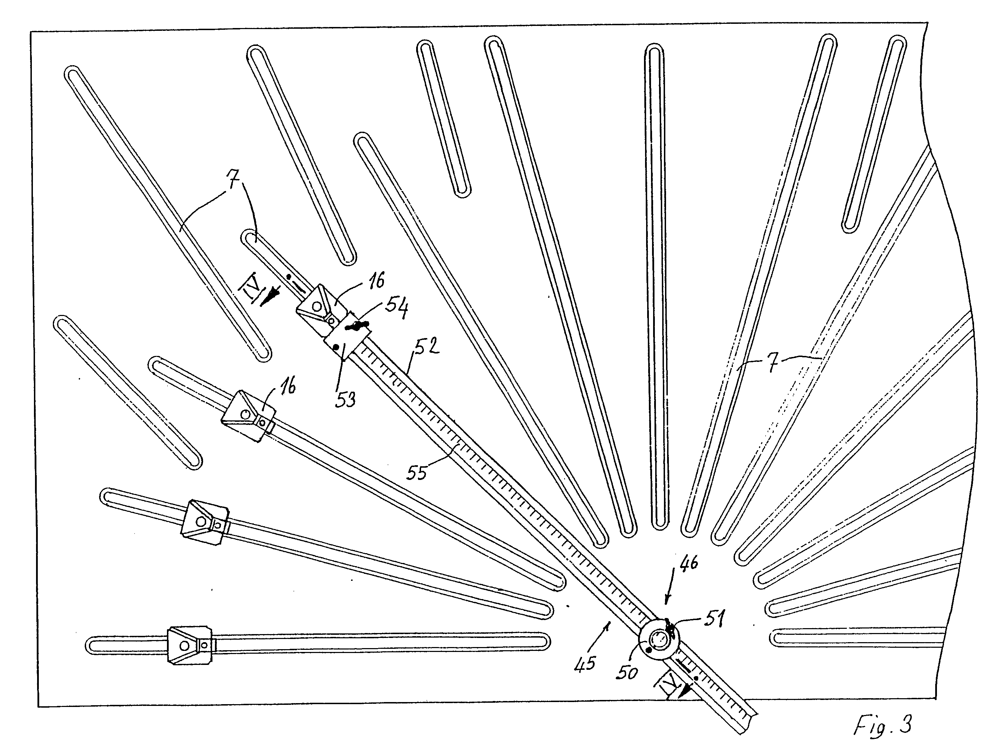

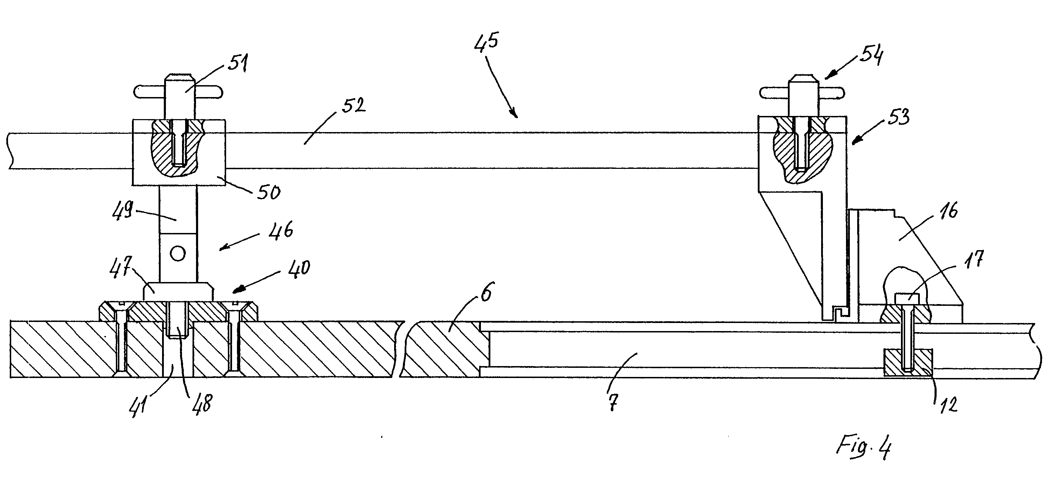

Ein so definierter und konkretisierter Kreismittelpunkt ist insbesondere für die exakte Formgebung der Schablonen 2, 3, d. h. für das exakte Ausrichten der Justierböcke 15, 16 vorteilhaft. In Fig. 3 und 4 findet sich neben der Montageplatte 6 mit den Schlitzen 7 ein insgesamt mit 45 bezeichnetes Ausrichtwerkzeug dargestellt, welches anstelle des vorerwähnten Ziehwerkzeugs 5 in die Drehlageraufnahme 40 eingesetzt ist. Ein entsprechender Drehlagerfuß 46 mit einer Fußplatte 47 und einem Gewindezapfen 48 trägt eine in der Mitte quergeteilte Säule 49 mit einem innenseitigen Drehzapfen, so daß ein oberer Teil der Säule gegenüber einem unteren Teil verdrehbar ist. Der obere Teil trägt eine Klemmschelle 50 mit einem seitlich angeordneten Knebel 51, welche einen Schwenkarm 52 umgreift, der endseitig einen Ausrichtkopf 53 hält.

Der Ausrichtkopf 53 ist auch mit einem Knebel 54 lösbar am Schwenkarm 52 festgelegt, wenngleich er typischerweise an dieser Stelle verbleibt, von der aus eine Maßskala 55 an der Oberseite des Schwenkarms 52 zum Drehlagerfuß 46 verläuft und ein maßgenaues, reproduzierbares Justieren ermöglicht.

Der Ausrichtkopf 53 reicht nach unten bis in die Nähe der Montageplatte 6 und bietet eine endseitige Anschlagfläche für die an der Bogenaußenseite liegenden Justierböcke 16, die dann gegen den Ausrichtkopf 53 herangerückt und fixiert werden können.

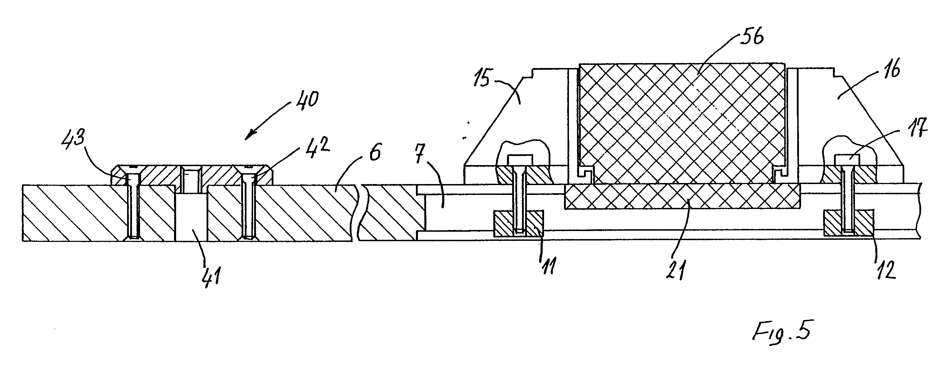

Die innenliegenden Justierböcke 15 könnten grundsätzlich auf ganz entsprechende Weise festgelegt werden. Es hat sich aber als einfacher herausgestellt, hier eine Einstellehre 56 (vgl. Fig. 5) zu verwenden, die einen dem Außenquerschnitt der beiden Schablonen 2, 3 entsprechenden Abstand definiert und dann das Einteilen eines innenliegenden Justierbocks 15 unter direkter und damit genauerer Bezugnahme auf den zugehörigen außenliegenden Justierbock ermöglicht. Zuvor ist jeweils die Einlegeplatte 21 in den Bereich unter bzw. zwischen den Justierböcken 15, 16 eingebracht worden.

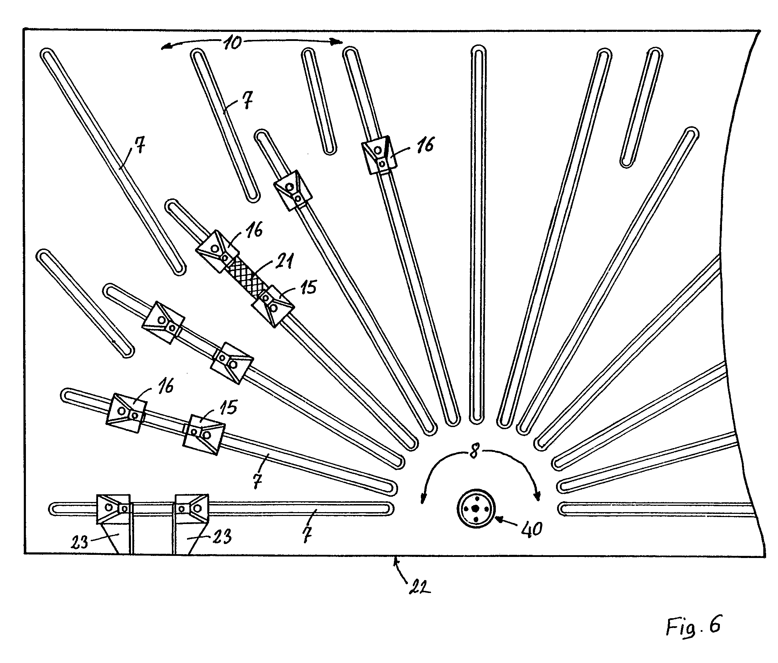

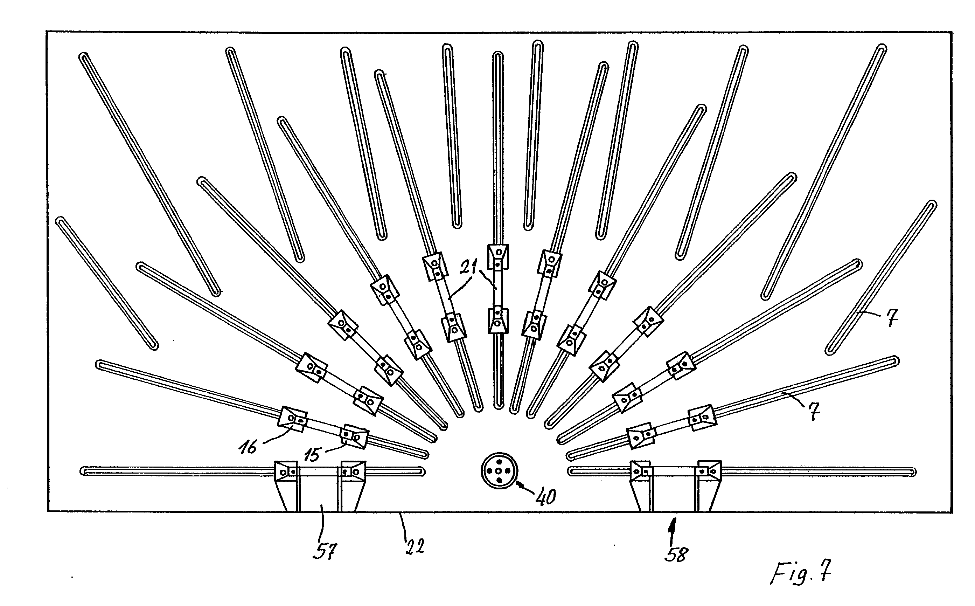

Es ergibt sich, wie in Fig. 6 angedeutet, ein fortschreitendes Einrichten der Justierböcke, wobei es sowohl möglich ist, erst alle außenliegenden Justierböcke 16 und dann erst die innenliegenden Justierböcke 15 einzurichten, wie auch welchselweise unter zwischenzeitlicher Benutzung der Einstellehre 56 vorzugehen. Das Ergebnis ist die aus Fig. 7 ersichtliche Anordnung der Klemmböcke 15 und 16, an denen die Formschablonen 2 bzw. 3 mittels Klammerbacken befestigt werden. Die Formschablonen werden auf einer Seite, im vorliegenden Fall bei 57, randschlüssig mit der Kante 22 der Montageplatte 6 angeordnet und können auf der anderen Seite bei 58 je nach Länge der Formschablonen überstehen.

Bei 57 ist damit eine Einführungsstelle für das Einziehen des erweichten Profilstrangabschnitts geschaffen. Diese Stelle wird auch auf die Position eines Heizgerätes durch entsprechendes Verstellen des Aufspanntisches bzw. der Montageplatten ausgerichtet.

In den Fig. 8 und 11 ist die Ausrichtung der Justierböcke und auch der Ziehvorgang bei der Herstellung von sog. Stichbögen, d. h. Segmentbögen großen Durchmessers und weit unter 180° liegenden Umfangswinkel dargestellt. Hierbei wird von dem bereits erwähnten Fächer 10 von Befestigungsschlitzen 7 Gebrauch gemacht. Der größe Krümmungsradius solcher Stichbögen und die von der Praxis her bestehende Anforderung an möglichst geringe Hauptabmessungen der Montageplatte 6 führen zu Kreismittelpunkten außerhalb des Grundrisses der Montageplatte 6.

Um auch hier einen Kreismittelpunkt abgreifbar zu machen und eine entsprechende Drehlageraufnahme vorzusehen, ist ein Ausleger in Form eines feststehenden, quer zur Kante 22 über den Grundriß der Montageplatte 6 hinausragenden Arms vorgesehen, der mit einem Schraubbolzen 61 auf der Drehlageraufnahme 40 festgeschraubt und durch eine zusätzliche, in die Montageplatte 6 eingreifende Schraube 62 gegen Verdrehen gesichert ist.

Der Ausleger 60 bildet eine Drehlageraufnahme 63 mit einem von oben nach unten durchgehenden Loch 64 und einer von unten anzuziehende Rändelmutter, mit der ein Drehlagerfuß 29 bzw. 46 der schon erwähnten Art näherungsweise in dem Niveau oberhalb der Montageplatte wie bei der Drehlageraufnahme 40 festlegbar ist.

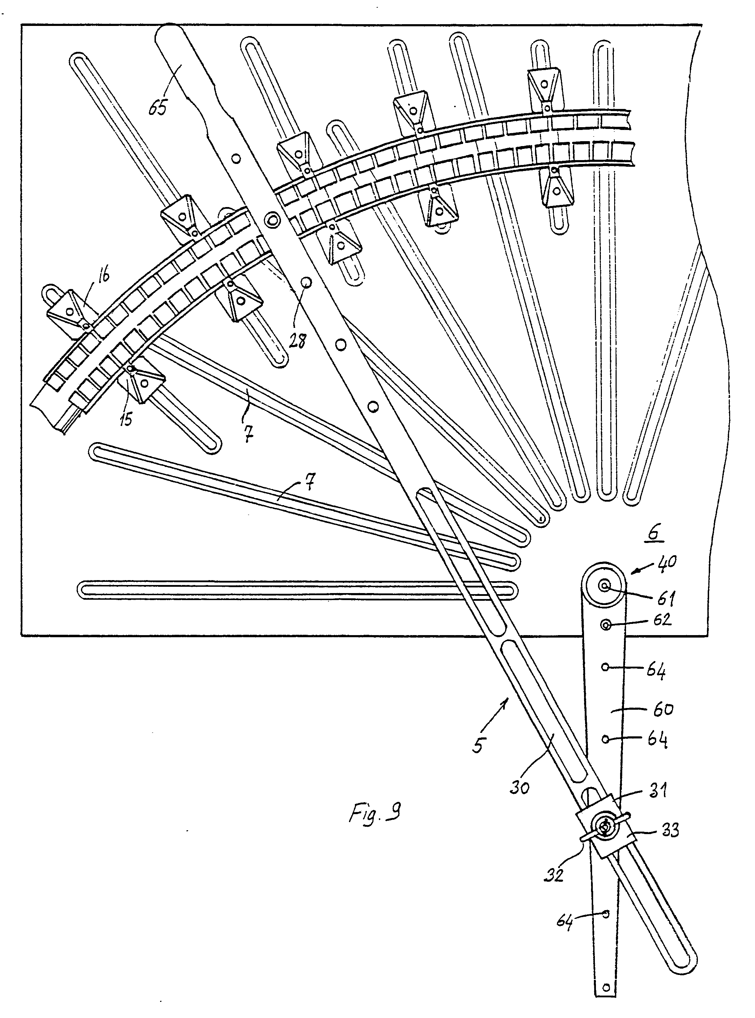

Wie aus Fig. 8 und 9 ersichtlich, besitzt der Ausleger 60 eine Reihe von Löchern 64, so daß die Drehlageraufnahme 63 entsprechend verlegbar ist. Wie bereits erwähnt, ist eine exakt radiale Ausrichtung der Schlitze 7 dazu nicht zwingend geboten.

Die Fig. 8 bis 9 verdeutlichen auch, daß das Ausrichtwerkzeug 45 und das Ziehwerkzeug 5 eine hinreichende Länge haben müssen. Es besteht aber auch die Möglichkeit, diese Werkzeuge mit Verlängerungselementen auszustatten oder aber wahlweise längere und kürzere Werkzeuge vorzusehen. Das Ziehwerkzeug ist endseitig mit einem Handgriff 65 ausgestattet, der eine direkte Handhabung ermöglicht. Diese ist insbesondere von Interesse, wenn das Ziehwerkzeug an dem Drehlagerfuß nicht radial festgelegt ist.

Als Material für die beschriebene Vorrichtung ist im allgemeinen feuchtigkeitsbeständiges und festes Material vorzusehen. Für die Montageplatte 6 hat sich beispielsweise ein Schichtstoffmaterial bewährt, während vorzugsweise die Justierböcke 15, 16 aus Aluminiumdruckguß und die Werkzeuge aus Aluminium gefertigt sind.

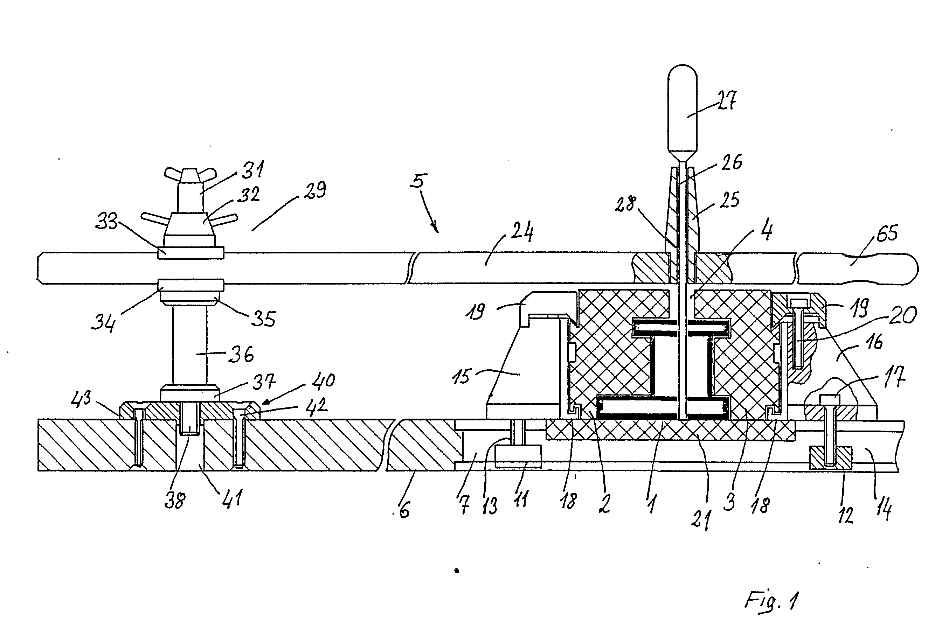

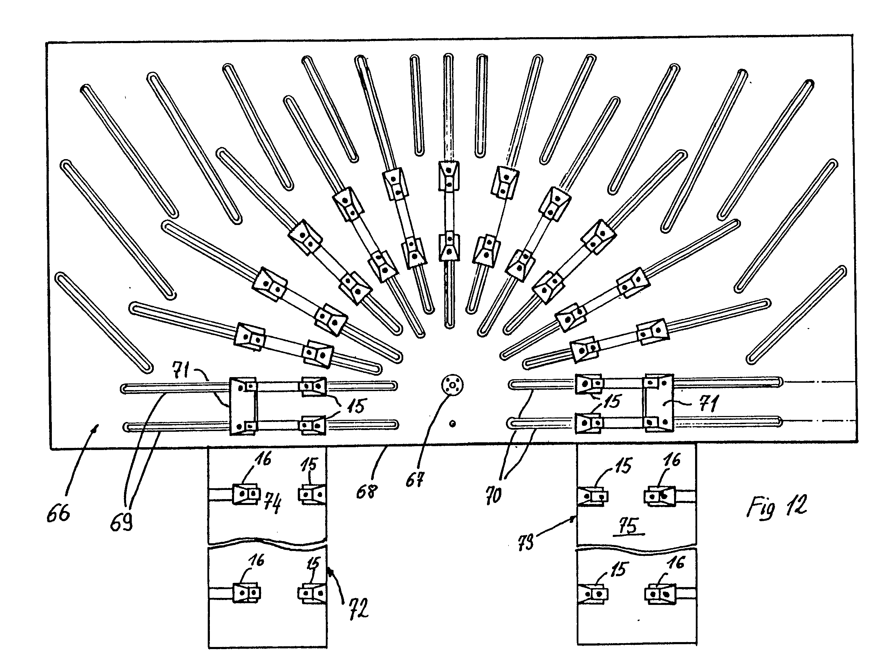

In Fig. 12 ist eine Montageplatte 66 dargestellt, die weitgehend der Montageplatte 6 nach den Fig. 1 bis 11 gleicht. Allerdings weist sie an einem nahe einer Drehlageraufnahme 67 gelegenen Längsrand 68 zwei Schlitzpaare 69 und 70 auf, die paarweise parallel zueinander verlaufen. Dort sind zum einen Justierböcke 15 der bereits erwähnten Art und zum anderen Doppelböcke 71 vorgesehen, die außenseitig an der Formschablone anzubringen sind und diese aus der Bogenform in eine tangentiale Endform überführen.

An dem Rand 68 der Montageplatte 66 sind weiterhin Anschlußplatten 72 und 73 angesetzt, die wiederum Justierböcke 15 und 16 tragen und dazwischen Aufnahmebereiche 74 bis 75 für gradschenklige Verlängerungen der Formschablone an beiden Enden des Bogenteils bilden.

Die sich in der Figur abzeichnende U-Form erlaub es, nicht nur mehr oder weniger gleichmäßige Kreisbögen herzustellen, sondern auch diese in gerade Anschlußstücke übergehen zu lassen. Derartige Formen werden in unterschiedlichen Anwendungsbereichen gebraucht, u. a. auch bei Fensterrahmen, bei denen ein oberer Bogen und die senkrechten Fortsetzungen des Bogens in einem Stück geformt werden können. Der Ziehvorgang in einer entsprechenden, U-förmig vorgegebenen Formschablone kann auch mit Hilfe eines Ziehwerkzeugs nach Fig. 2 durchgeführt werden, sofern die Schlitze 30 lang genug ausgebildet sind.

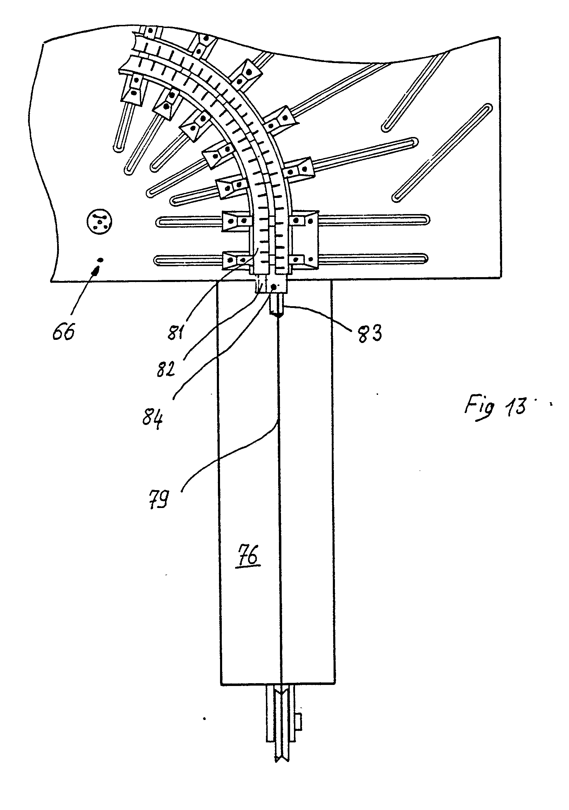

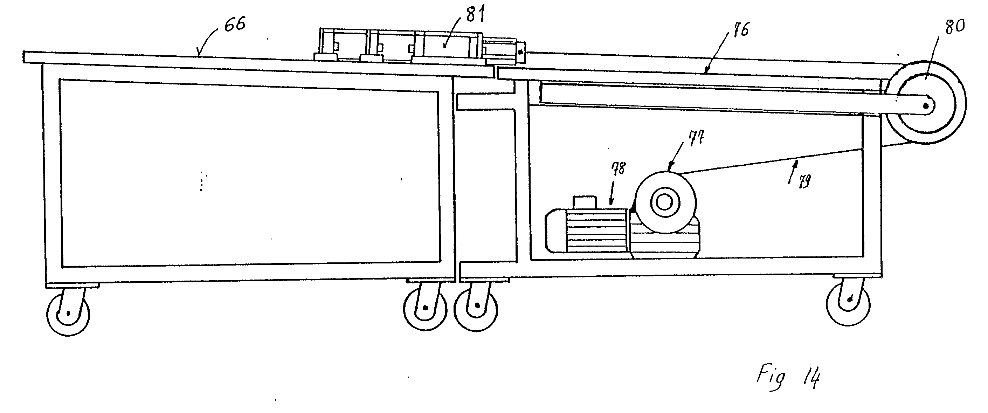

Eine weitere Ausführungsform nach den Fig. 13 und 14 sieht ganz entsprechend vor, gerade, tangentiale Schenkelverlängerungen in einem Stück mit dem Bogen herzustellen. In Fig. 13 ist dabei von zwei Anschlußplatten nur eine Anschlußplatte 76 dargestellt, die (nicht eingezeichnete) Justierböcke tragen kann und insofern etwa mit der Anschlußplatte 75 übereinstimmt. Unterhalb der Anschlußplatte 76 ist eine Winde 77 mit einem Getriebemotor 78 angeordnet, mit deren Hilfe ein Band 79 aufgespult werden kann, welches um eine Umlenkrolle 80 am Ende der Anschlußplatte 76 und dann über diese hinweg in eine Formschablone 81 hineinverläuft, wo sie in dem Ende eines erweichten Formlings 82 verankert ist. Vorzugsweise wird dabei eine Einfütterung 83 in Hohlräumen des erweichten Profilstrangabschnitts bzw. Formlingsvorgesehen, um zumindest im Befestigungsbereich Verformungen zu vermeiden. Eine Querbohrung 84 am Ende des erweichten Profilstrangabschnitts zeigt an, daß dort zusätzlich ein Ziehwerkzeug eingesteckt werden kann. In diesem Fall ist das Band 79 in der Lage, den erweichten Profilstrangabschnitt durch die Formschablone 81 in Längsrichtung hindurchzuziehen. Das Ziehwerkzeug kann aber wertvolle zusätzliche Führung innerhalb der Schablone liefern und gleichzeitig, in das Loch 84 hineingesteckt, eine Verankerung des Bandes 79 und der Fütterung 83 gegenüber dem erweichten Profilstrangabschnitt gewährleisten. Wird der Werkzeugkopf des Ziehwerkzeugs allerdings aus dem Loch 84 herausgezogen, dann läßt sich die Fütterung 83 mit dem Band 79 herausziehen, indem die Winde 77 weiterhin in Aufwickelrichtung angetrieben wird.

Das Band 79 kann grundsätzlich unterschiedlicher bekannter Art sein, etwa ein Textil-, Metalloder Kunststoffband sein. Besonders bewährt hat sich ein textiler Kunststoff- Gurt aus hochfesten hitzebeständigen Fasern. Mit Hilfe des Bandes 79 läßt sich der Ziehvorgang durch Motorantrieb gleichmäßig und leicht durchführen.

Auf der anderen Seite kann auch ein Ziehwerkzeug nach Art des Ziehwerkzeugs 5 der eingangs beschriebenen Art mit einem Motorantrieb versehen werden, in dem ein langsam laufender, vorzugsweise durch ein Getriebe untersetzter Motor für eine gleichmäßige Schwenkbewegung sorgt. Ein solcher Motor kann unterhalb der Montageplatte angeordnet sein und dann über eine verdrehsichere Welle auf das Ziehwerkzeug wirken.

Die Anschlußplatten 72,73 und 76 sind so gestaltet, daß ihr Abstand voneinander (symmetrisch) verändert werden kann, damit die bei größeren Bogen weiter auseinanderliegenden U-Schenkel und bei kleineren Bögen enger zusammenliegenden U-Schenkel passend eingestellt werden können. Die hierzu vorgesehenen Führungen sind bekannter Art und brauchen nicht im einzelnen beschrieben zu werden.

**Patentansprüche**

1. Aufspanntisch für bogenförmig festzulegende Ziehschablonen-Paare (2, 3) zur Einzieh-Verformung von extrudierten und nachträglich erweichten, geraden Kunststoffprofilstrangabschnitten in Bögen vorgebbarer Längskrümmung, wobei der Tisch eine oberseitige Montageplatte (6) mit Befestigungsschlitzen (7) umfaßt, die in einer oder mehreren Gruppen fächerartig angeordnet sind, dadurch gekennzeichnet, daß die Montageplatte (6) zumindest eine einen Kreismittelpunkt (9) für veränderbare Kreisbögen von Ziehschablonen (2, 3) markierende und zur Befestigung von schwenkbeweglichen Ausricht- und Ziehwerkzeugen (5, 45) ausgestaltete Drehlageraufnahme (40, 63) aufweist.

2. Aufspanntisch nach Anspruch 1, dadurch gekennzeichnet, daß die Befestigungsschlitze (7) jeder Gruppe radial auf einen jeder Gruppe zugehörigen Kreismittelpunkt zulaufen.

3. Aufspanntisch nach Anspruch 1 oder 2, dadurch gekennzeichnet, daß die Drehlageraufnahme (40, 63) in Form einer Gewindeplatte ausgebildet ist.

4. Aufspanntisch nach Anspruch 1, 2 oder 3, gekennzeichnet durch ein einen oberhalb der Monateplatte (6) beweglichen Schwenkarm (52) aufweisendes Ausrichtwerkzeug (45) mit einem endseitigen Ausrichtkopf (53) und einem auf der Drehlageraufnahme (40) festlegbaren Drehlagerfuß (46), deren Abstand voneinander längs des Schwenkarms (52) verstellbar ist.

5. Aufspanntisch nach Anspruch 4, dadurch gekennzeichnet, daß jede der beiden Schablonen (2, 3) des Ziehschablonenpaares an einer Reihe von in den Befestigungsschlitzen (7) mit einem Spannfuß (11, 12, 17) festgelegten Justierböcken (15, 16) anbringbar ist.

6. Aufspanntisch nach Anspruch 5, dadurch gekennzeichnet, daß die Justierböcke (15, 16) Klammerbacken (19) für einen formschlüssigen Eingriff in Profilnuten der Schablonen (2, 3) aufweisen.

7. Aufspanntisch nach Anspruch 6, dadurch gekennzeichnet, daß die Klammerbacken (19) mit von oben zu lösenden und festzuziehenden Spannschrauben (20) versehen sind.

8. Aufspanntisch nach Anspruch 5, 6 oder 7, dadurch gekennzeichnet, daß der Spannfuß (11, 12, 17) der Justierböcke (15, 16) eine durch den jeweiligen Befestigungsschlitz (7) hindurchgreifende, von oben zu betätigende Spannschraube (17) aufweist.

9. Aufspanntisch nach Anspruch 8, dadurch gekennzeichnet, daß die Spannschraube (17) in ein T-Profil-Mutterteil (11, 12) passend zu dem gleichfalls mit einem T-Profil versehenen Schlitz (7) eingeift.

10. Aufspanntisch nach einem der Ansprüche 4 bis 9, gekennzeichnet durch eine Einstellehre (56) in Form eines Profilstücks für den radialen Sollabstand der Justierböcke (15, 16) voneinander.

11. Aufspanntisch nach einem der Ansprüche 1 bis 10, gekennzeichnet durch in die Befestigungsschlitze (7) oberflächenbündig einsenkbare Einlegestäbe (21).

12. Aufspanntisch nach einem der Ansprüche 1 bis 11, dadurch gekennzeichnet, daß die Drehlageraufnahme (63) auf einem aus dem Grundriß der Montageplatte (6) vorspringenden Ausleger (60) angeordnet ist.

13. Aufspanntisch nach Anspruch 12, dadurch gekennzeichnet, daß die Drehlageraufnahme (63) als zweite Drehlageraufnahme gegenüber einer ersten, innerhalb des Montageplatten-Grundrisses liegenden Drehlageraufnahme (40) ausgebildet ist, wobei an letzterer der Ausleger (60) montiert ist.

14. Aufspanntisch nach Anspruch 13, dadurch gekennzeichnet, daß den Drehlageraufnahmen (40, 63) jeweils ein Fächer (8, 10) radial verlaufender Befestigungsschlitze (7) zugeordnet ist, wobei die Fächer (8, 10) ineinander verschachtelt sind.

15. Aufspanntisch nach einem der Ansprüche 1 bis 14, gekennzeichnet durch ein einen oberhalb der Montageplatte (6) beweglichen Schwenkarm (24) aufweisendes Ziehwerkzeug (5), mit einem auf der Drehlageraufnahme (40, 63) festlegbaren Drehlagerfuß (29) und einem Werkzeugkopf (25, 26, 27), deren Abstand voneinander längs des Schwenkarms (24) verstellbar ist.

16. Aufspanntisch nach Anspruch 15, dadurch gekennzeichnet, daß der Werkzeugkopf (25, 26, 27) zumindest ein Stecklager (25) für einen nach unten durchsteckbaren Ziehstift (26) bildet.

17. Aufspanntisch nach Anspruch 15 oder 16, dadurch gekennzeichnet, daß das Ziehwerkzeug (5) endseitig einen Handgriff (65) aufweist.

18. Aufspanntisch nach Anspruch 15, 16 oder 17, dadurch gekennzeichnet, daß der Schwenkarm (24) längsverschieblich auf dem Drehlagerfuß (29) geführt ist.

19. Aufspanntisch nach einem der Ansprüche 1 bis 18, dadurch gekennzeichnet, daß die Montageplatte (6) gegenüber einem Tischuntergestell in Richtung einer Kante (22) der Montageplatte (6) verschiebbar ist, an der auch die Drehlageraufnahme (40, 63) liegt.

20. Aufspanntisch nach Anspruch 19, gekennzeichnet durch ein Verstellgetriebe zwischen Montageplatte (6) und Tischuntergestell für ein gegenseitiges Verschieben.

21. Aufspanntisch nach einem der Ansprüche 1 bis 20, dadurch gekennzeichnet, daß er über Rollen verfahrbar und verdrehbar auf dem Boden aufsteht.

22. Aufspanntisch nach einem der Ansprüche 1 bis 21, dadurch gekennzeichnet, daß die Montageplatte (66) zwei beidseitig und in tangentialer Verlängerung der Bogen angeordnete Aufnahmebereiche (74, 75, 76) für gerade Verlängerungen der Formschablone (81) aufweist.

23. Aufspanntisch nach Anspruch 22, dadurch gekennzeichnet, daß die Aufnahmebereiche (74, 75, 76) in zwei zueinander parallelen und in ihrem Abstand zueinander verstellbaren Anschlußplatten (72, 73) bestehen.

24. Aufspanntisch nach Anspruch 22 oder 23, dadurch gekennzeichnet, daß mit einer der Anschlußplatten (76) eine Bandzugvorrichtung (77, 78) für ein in Längsrichtung durch die Formschablone zu ziehendes Band (79) verbunden ist.

25. Aufspanntisch nach einem der Ansprüche 22 bis 24 in Verbindung mit einem der Ansprüche 14 bis 18, dadurch gekennzeichnet, daß das Band (79) zumindest mittelbar mit einem Teil (26) des Werkzeugkopfes (25, 26, 27) verbindbar ist.

## Claims

1. A mounting table for pairs of drawing templates (2, 3) to be located in the form of an arc for the pull-in shaping of extruded and subsequently softened, straight lengths of profiled plastics strands into arcs with a preset longitudinal curvature, the table comprising a mounting plate (6) at the top, with mounting slots (7) which are arranged like a fan in one or more groups, characterised in that the mounting plate (6) comprises at least one pivot-bearing seat (40, 63) marking the centre (9) of a circle for variable arcs of drawing templates (2, 3) and adapted for securing swivelling aligning and drawing tools (5, 45).

2. A mounting table according to claim 1, characterised in that the mounting slots (7) of each group extend radially towards the centre of a circle belonging to each group.

3. A mounting table according to claim 1 or 2, characterised in that the pivot-bearing seat (40, 63) is constructed in the form of a threaded plate.

4. A mounting table according to claim 1, 2 or 3, characterised by an aligning tool (45) which comprises a swivel arm (52) movable above the mounting plate (6) and which has an aligning head (53) at the end and a pivot-bearing foot (46) locatable on the pivot-bearing seat (40), the spacing apart of which is adjustable along the swivel arm (52).

5. A mounting table according to claim 4, characterised in that each of the two templates (2, 3) of the pair of drawing templates can be fitted to a series of adjusting blocks (15, 16) located in the mounting slots (7) by a clamping foot (11, 12, 17).

6. A mounting table according to claim 5, characterised in that the adjusting blocks (15, 16) comprise cramping jaws (19) for positive engagement in profiled grooves in the templates (2, 3).

7. A mounting table according to claim 6, characterised in that the cramping jaws (19) are provided with tightening screws (20) which can be tightened or loosened from above.

8. A mounting table according to claim 5, 6, or 7, characterised in that the clamping foot (11, 12, 17) of the adjusting blocks (15, 16) comprises a tightening screw engaging through the particular mounting slot (7) and adapted to be actuated from above.

9. A mounting table according to claim 8, characterised in that the tightening screw (17) engages in a T-section nut member (11, 12) fitting the slot (7) likewise provided with a T-section.

10. A mounting table according to any one of the claims 4 to 9, characterised by a setting gauge (56) in the form of a profile member for the correct radial spacing apart of the adjusting blocks (15, 16).

11. A mounting table according to any one of the claims 1 to 10, characterised by insertion bars (21) which can be sunk into the mounting slots (7), flush with the surface.

12. A mounting table according to any one of the claims 1 to 11, characterised in that the pivot-bearing seat (63) is disposed on an arm (60) projecting from the plan view of the mounting plate (6).

13. A mounting table according to claim 12, characterised in that the pivot-bearing seat (63) is constructed in the form of a second pivot-bearing seat in relation to a first pivot-bearing seat (40) situated inside the plan view of the mounting plate, the arm (60) being mounted on the latter seat.

14. A mounting table according to claim 13, characterised in that a fan (8, 10) of mounting slots (7) extending radially is associated with each of the pivot-bearing seats (40 63), the fans (8, 10) being interlaced in one another.

15. A mounting table according to any one of the claims 1 to 14, characterised by a drawing tool (5) which comprises a swivel arm (24) movable above the mounting plate (6) and which has a pivot-bearing foot (29) locatable on the pivot-bearing seat (40, 63) and a tool head (25, 26, 27), the spacing apart of which is adjustable along the swivel arm (24).

16. A mounting table according to claim 15, characterised in that the tool head (25, 26, 27) forms at least one guide bearing (25) for a draw pin (26) to be pushed downards through it.

17. A mounting table according to claim 15 or 16, characterised in that the drawing tool (5) comprises a handle (65) at the end.

18. A mounting table according to claims 15, 16 or 17 characterised in that the swivel arm (24) is guided for longitudinal displacement on the pivot-bearing foot (29).

19. A mounting table according to any one of the claims 1 to 18, characterised in that the mounting plate (6) is displaceable in relation to a supporting frame for the table in the direction of an edge (22) of the mounting plate (6) at which the pivot-bearing seat (40, 63) is also situated.

20. A mounting table according to claim 19, characterised by an adjustment mechanism between mounting plate (6) and the supporting frame for the table, for mutual displacement.

21. A mounting table according to any one of the claims 1 to 20, characterised in that it can travel over rollers and stands on the ground for turning.

22. A mounting table according to any one of the claims 1 to 21, characterised in that the mounting plate (66) comprises two receiving regions (74, 75, 76) for straight extensions of the moulding templates (81), which regions are disposed one at each side of and in a tangential extension of the arc.

23. A mounting table according to claim 22, characterised in that the receiving regions (74, 75, 76) consists of two connecting plates (72, 73) which are parallel to one another and adjustable in their spacing in relation to one another.

24. A mounting table according to claim 22 or 23, characterised in that a band pulling device (77, 78) for a band (79) to be pulled through the moulding template in the longitudinal direction is connected to one of the connecting plates (76).

25. A mounting table according to any one of the claims 22 to 24 in combination with any one of the claims 14 to 18, characterised in that the band (79) can be connected at least indirectly to a member (26) of the tool head (25, 26, 27).

**Revendications**

1. Table de fixation pour des paires de gabarits de formage (2, 3) à immobiliser en arc de cercle pour déformer par entraînement des tronçons de profilés en matière plastique droits, extrudés et ultérieurement ramollis, en des cintres de courbure longitudinale pouvant être prédéfinie, la table comprenant une plaque de montage (6) formant sa surface supérieure, qui présente des fentes de fixation (7) disposées en éventail en un ou plusieurs groupes, caractérisée en ce que la plaque de montage (6) comporte au moins une embase de pivotement (40, 63) marquant un centre de cercle (19) pour des arcs de cercle variables de gabarits de formage (2, 3) et conçue pour fixer des outils d'alignement et d'entraînement (5, 45) mobiles par pivotement.

2. Table de fixation suivant la revendication 1, caractérisée en ce que les fentes de fixation (7) de chaque groupe convergent radialement vers un centre de cercle que chaque groupe possède.

3. Table de fixation suivant la revendication 1 ou 2, caractérisée en ce que l'embase de pivotement (40, 63) a la forme d'une plaque percée d'un trou taraudé.

4. Table de fixation suivant la revendication 1, 2 ou 3, caractérisée par un outil d'alignement (45) comportant un bras pivotant (52) mobile au-dessus de la plaque de montage (6), qui est pourvu d'une tête d'alignement d'about (53) et d'un dispositif de pivotement (46) pouvant être fixé sur l'embase de pivotement (40), dont l'espacement réciproque est réglable le long du bras pivotant (52).

5. Table de fixation suivant la revendication 4, caractérisée en ce que chacun des deux gabarits (2, 3) de la paire de gabarits de formage peut être monté sur une série d'équerres d'ajustement (15, 16) fixées dans les fentes de fixation (7) à l'aide d'un moyen de serrage (11, 12, 17).

6. Table de fixation suivant la revendication 5, caractérisée en ce que les équerres d'ajustement (15, 16) comportent des mâchoires de serrage (19) destinées à attaquer avec épousement de forme, des rainures profilées des gabarits (2, 3).

7. Table de fixation suivant la revendication 6, caractérisée en ce que les mâchoires de serrage (19) sont pourvues de vis de serrage (20) pouvant être desserrées et serrées du haut.

8. Table de fixation suivant la revendication 5, 6 ou 7, caractérisée en ce que le moyen de serrage (11, 12, 17) des équerres d'ajustement (15, 16) comprend une vis de serrage (17) actionnée par le haut, traversant la fente de fixation (7) correspondante.

9. Table de fixation suivant la revendication 8, caractérisée en ce que la vis de serrage (17) se visse dans une pièce formant écrou, de profil en T (11, 12), qui s'adapte à une fente (7) également de profil en T.

10. Table de fixation suivant l'une quelconque des revendications 4 à 9, caractérisée par un calibre d'ajustage (56) ayant la forme d'une pièce profilée déterminant l'espacement radial nominal entre les équerres d'ajustement (15, 16).

11. Table de fixation suivant l'une quelconque des revendications 1 à 10, caractérisée par des barrettes d'insertion (21) pouvant être encastrées dans les fentes de fixation (7) au ras de la surface de celles-ci.

12. Table de fixation suivant l'une quelconque des revendications 1 à 11, caractérisée en ce que l'embase de pivotement (63) est montée sur un bras en porte à faux (60) qui fait saillie en dehors du contour horizontal de la plaque de montage (6).

13. Table de fixation suivant la revendication 12, caractérisée en ce que l'embase de pivotement (63) a la forme d'une seconde embase de pivotement par rapport à une première embase de pivotement (40) disposée à l'intérieur du contour horizontal de la plaque de montage, le bras en porte à faux étant monté sur cette première embase.

14. Table de fixation suivant la revendication 13, caractérisée en ce qu'à chaque embase de pivotement (40, 63) est associé un éventail (8, 10) de fentes de fixation radiales (7), les éventails (8, 10) étant imbriqués l'un dans l'autre.

15. Table de fixation suivant l'une quelconque des revendications 1 à 14, caractérisée par un outil de formage (5) comprenant un bras pivotant (24) mobile au-dessus de la plaque de montage (6), qui est pourvu d'un dispositif de pivotement (29) pouvant être fixé sur l'embase de pivotement (40, 63) et d'une tête d'outil (25, 26, 27), dont l'espacement réciproque est réglable le long du bras pivotant (24).

16. Table de fixation suivant la revendication 15, caractérisée en ce que la tête d'outil (25, 26, 27) forme au moins un dispositif d'enfichage (25) pour une tige de formage (26) pouvant être enfoncée vers le bas.

17. Table de fixation suivant la revendication 15 ou 16, caractérisée en ce que l'outil de formage (5) comporte une poignée (65) à son extrémité.

18. Table de fixation suivant la revendication 15, 16 ou 17, caractérisée en ce que le bras pivotant (24) est guidé de manière mobile dans le sens longitudinal sur le dispositif de pivotement (29).

19. Table de fixation suivant l'une quelconque des revendications 1 à 18, caractérisée en ce que la plaque de montage (6) peut être déplacée par rapport à une infrastructure de table en direction d'un de ses bords (22) sur lequel l'embase de pivotement (40, 63) est également prévue.

20. Table de fixation suivant la revendication 19, caractérisée par un mécanisme de réglage entre la plaque de montage (6) et l'infrastructure de table permettant un réglage réciproque.

21. Table de fixation suivant l'une quelconque des revendications 1 à 20, caractérisée en ce qu'elle est posée sur le sol d'une manière permettant son déplacement et sa rotation sur des roulettes.

22. Table de fixation suivant l'une quelconque des revendications 1 à 21, caractérisée en ce que la plaque de montage (66) comporte deux zones de réception (74, 75, 76) disposées des deux côtés de l'arc et dans le prolongement tangentiel de celui-ci et destinées à des prolongements droits du gabarit de façonnage (81).

23. Table de fixation suivant la revendication 22, caractérisée en ce que les zones de réception (74, 75, 76) sont formées de deux plaques de jonction (72, 73) qui sont parallèles l'une à l'autre et dont l'espacement réciproque peut être réglé.

24. Table de fixation suivant la revendication 22 ou 23, caractérisée en ce qu'à une des plaques de jonction (76) est relié un dispositif de traction (77, 78) pour un ruban (79) à tirer longitudinalement à travers le gabarit de façonnage.

25. Table de fixation suivant l'une quelconque des revendications 22 à 24 en association avec l'une quelconque des revendications 14 à 18, caractérisée en ce que le ruban (79) peut être relié au moins indirectement à une partie (26) de la tête d'outil (25, 26, 27).

Fig. 1

Fig. 2

0 128 329

Fig. 3

Fig. 4

0 128 329

Fig.5

0 128 329

Fig. 6

0 128 329

Fig. 7

0 128 329

Fig. 8

Fig. 9

Fig. 10

Fig. 11

Fig 12

0 128 329

Fig 13

66

81

82

84

79

83

76

Fig 14

0 128 329